# EUROPEAN PATENT SPECIFICATION

(11) **EP 3 608 374 B1**
(45) Date of publication and mention of the grant of the patent: **30.06.2021**
(21) Application number: 18188423.0
(22) Date of filing: 10.08.2018
(51) Int. Cl.: C09D 11/38, C09D 11/101

(54) **RADIATION CURABLE INK COMPOSITION**
STRAHLUNGSHÄRTBARE TINTENZUSAMMENSETZUNG
COMPOSITION D'ENCRE DURCISSABLE PAR RADIATION

(43) Date of publication of application: 12.02.2020
(73) Proprietor: Canon Production Printing Holding B.V., 5914 HH Venlo (NL)
(72) Inventor: BLOCKEN, Evelyn R.C.Y., 5914 CA Venlo (NL); VAN DEN BEUKEN, Gerardus P.M., 5914 CA Venlo (NL); HOFSTRA, Ronald M.J., 5914 CA Venlo (NL); VAN BUUL, Arend M., 5914 CA Venlo (NL); VAN DE PUT, Marcellus W.P., 5914 CA Venlo (NL)
(74) Representative: Canon Production Printing IP Department

(56) References cited:
- EP-A1- 2 302 011
- EP-A1- 3 173 447
- WO-A1-02/38687
- US-A1- 2008 000 384

## Description

The invention relates to a radiation curable ink composition. Further, the invention relates to a method for preparing such radiation curable ink composition. In addition, the invention relates to a method for applying an image onto a recording medium using such radiation curable ink composition.

### Background of the invention

Radiation curable gelling inks are known in the art. These inks comprise one or more radiation curable components and are fluid at elevated temperature and become (*semi*-) solid -even if not yet cured- at lower temperatures. These inks are typically jetted at elevated temperatures. Phase change inks may become solid or *semi*-solid upon cooling down on a recording medium, e.g. a sheet of paper. As a result, spread of a droplet of ink on the recording medium may be decreased and color bleeding may be prevented. An example of a phase change radiation curable inkjet ink is a gelling radiation curable inkjet ink. Gelling radiation curable inkjet ink compositions typically comprise a gellant. Gellants are also known in the art as gelling agents or thickeners. Examples of gellants used in gelling radiation curable inkjet ink compositions are waxes, such as natural waxes and long chain carboxylic acids, and ketones. The presence of a gellant can cause a viscosity increase in the inkjet ink composition upon cooling of the ink composition. The viscosity increase in the ink composition should be sufficient to adequately control droplet spreading.

A problem of radiation curable gelling inks is that their adhesion to a recording medium is often insufficient. There is a need for radiation curable gelling inks having improved adhesion.

It is therefore a first object of the invention to provide a radiation curable gelling ink having improved adhesion. It is a further object of the invention to provide a method for preparing such radiation curable gelling ink.

### Summary of the invention

The first object of the invention is achieved in a radiation curable ink composition, the ink composition comprising a gelling agent, the ink composition further comprising propylene glycol and diglycerol.

### Radiation-curable medium

The radiation curable inkjet ink composition may comprise a radiation-curable medium. The radiation-curable medium may comprise at least one radiation-curable component. A radiation-curable component is a component that may react (e.g. polymerize) under influence of suitable radiation, such as electromagnetic radiation, e.g. ultraviolet (UV) radiation. Examples of radiation-curable components are epoxides and (meth)acrylates. (Meth-)acrylates may comprise one or more reactive groups for forming an acrylate polymer. The radiation-curable medium may comprise one type of radiation curable compound or alternatively, the radiation-curable medium may comprise a mixture of radiation-curable compounds.

The radiation-curable medium may further comprise at least one inhibitor. An inhibitor is a component that prevents (inhibits) unwanted polymerization of the radiation-curable compound. Inhibitors may be added to the radiation curable inkjet ink composition to increase the shelf life of the ink composition.

The radiation-curable medium may further comprise at least one photo initiator. A photo initiator is a component that improves the efficiency of curing; i.e. increases the polymerization rate when the ink composition is irradiated with suitable radiation, such as UV radiation.

The radiation-curable medium may further comprise a solvent, such as water or an organic solvent. The solvent may be added to the radiation curable medium to tune ink properties, such as viscosity.

Further, additional components may be added to the radiation curable medium. For example, the radiation curable medium may comprise surfactants, antibacterial components and anti-fungi components.

### Colorant

The radiation curable inkjet ink composition may further comprise a colorant, such as a pigment, a dye or a mixture thereof. Further, the radiation curable inkjet ink composition may comprise a mixture of dyes and/or a mixture of pigments. The colorant may provide the ink composition with a predetermined color.

### Gelling agent

The gelling agent may provide the ink with gelling properties. A gelling ink may be fluid at elevated temperatures and may be in a gelled state at lower temperatures. The temperature at which a gel is formed is referred to as gelling temperature. The gelling temperature may be suitably controlled by selecting an appropriate gellant. Examples of suitable gellants are waxes, such as vegetable waxes, such as candelila wax, carnauba wax, rice wax, jojoba wax, animal waxes, such as bees wax and mineral waxes, such as ketones, montan wax, fatty acids, fatty alcohols, fatty acid amides and fatty acid esters, for example fatty acid esters of pentaerythritol and/or glycerol.

### Propylene glycol

Propylene glycol, also known as propane-1,2-diol, a clear, colorless and hygroscopic liquid. Preferably, it is used as a racemic mixture. Propylene glycol is used in industry as a solvent or a humectant.

Propyleneglycol may be present in the ink composition in an amount of less than 1 wt% based on the total weight of the ink composition, preferably less than 0.5 wt% based on the total weight of the ink composition, such as less than 0.1 wt % based on the total weight of the ink composition.

### Diglycerol

Diglycerol, also known as diglycerin, is a dimer of glycerol. Diglycerol is used e.g. in cosmetics.

Diglycerol may be present in the ink composition in an amount of less than 1.5 wt% based on the total weight of the ink composition, preferably less than 1.0 wt% based on the total weight of the ink composition, such as less than 0.5 wt % based on the total weight of the ink composition.

In an embodiment, the ratio propylene glycol : diglycerol is in the range of 1 : 5 to 1 :50. Preferably, the ratio propylene glycol: diglycerol is in the range of 1 : 10 to 1 :30.

In an embodiment, the ink composition comprises at least one (meth)acrylate monomer. The (meth)acrylate may be a monofunctional acrylate, a difunctional acrylate, a trifunctional acrylate, a tetrafunctional acrylate or a multifunctional acrylate, i.e. an acrylate comprising more than four acrylates groups. Additionally or alternatively, the acrylate may be an oligomer or a polymer comprising at least one acrylate group. The ink composition may comprise only one radically polymerisable component. Alternatively, the ink composition may comprise a plurality of radically polymerisable components.

In an embodiment, the ink composition is an UV curable ink jet ink composition. Inkjet compositions are suited to be used in ink jet printers and ink jet processes. Inkjet allows making good quality images.

In an aspect of the invention, a method for preparing an ink composition according to the invention is provided, the method comprising the steps of:
a. providing a radiation curable vehicle;
b. providing a gelling agent;
c. providing propylene glycol ;
d. providing diglycerol ;
e. mixing the components.

The radiation-curable component, the gelling agent the propylene glycol and the diglycerol may be provided. Optionally, additional components may be provided, for example an additional solvent. The radiation-curable component and the gellant may be provided neat or they may be provided in a solution or dispersion. Optionally, a colorant may be provided. In case the colorant is a pigment, the pigment is preferably provided as a dispersion, such as an aqueous pigment dispersion. The components may be provided at once, or the components may be added subsequently. The components may be added in any suitable order. In case a dispersible component is added (e.g. a pigment), such dispersible component may be preferably added after the other components of the ink composition are provided. Mixing of the components may be carried out at any suitable temperature, for example room temperature.

In a further aspect of the invention, a method for applying an image onto a recording medium is provided, the method comprising the steps of:
a. providing an image by applying a predetermined pattern of droplets of an ink composition according to the invention onto the recording medium ;
b. curing the ink by irradiating the ink.

In the method, an image is applied onto a recording medium. In the method, in step a), an image is applied to the recording medium. The image may be applied using an ink composition according to the present invention. The ink composition may be applied onto the recording medium in a predetermined fashion, e.g. in accordance with image files stored on suitable storing means. The image may be applied for example by jetting droplets of the radiation-curable inkjet ink composition using an inkjet print head. Preferably, the temperature of the ink jet is such that the ink has a suitable viscosity to allow jetting of the ink. The recording medium may be a sheet-like medium, such as a sheet of paper or a sheet of vinyl. Alternatively, the recording medium may be a web, for example an endless belt. The web may be made of a suitable material. Optionally, the image may be dried after it has been applied onto the intermediate transfer member. Preferably, the temperature of the recording medium is lower than the temperature of the ink in the print head. Preferably, the temperature of the recording medium is lower than the gelling temperature of the ink. Thus, the ink may undergo a phase change after being applied onto the recording medium and a stable image may be formed, even if the ink is not cured immediately after deposition on the recording medium.

In the method, in step b), the radiation-curable inkjet ink composition is cured by irradiating the ink composition using UV radiation. The inkjet ink composition may be irradiated using a suitable source of radiation, such as a halogen lamp, a mercury lamp and/or a LED lamp. Optionally, a plurality of sources of radiation may be used to irradiate the inkjet ink composition.

In an embodiment, step b) is started after a time interval after step a) is performed, wherein the time interval is in the range of 5 - 500 s.

When using an ink composition comprising a gelling agent, the ink may undergo a phase transformation. If the ink undergoes a phase transformation, the ink may remain stable for a certain period of time, such as 500 s, even if the ink is not yet cured. It may be advantageous to allow a time interval to pass after jetting of the ink droplets before curing is started. During this time interval, a plurality of swaths may be applied on top of one another. Applying a subsequent layer of ink onto non-cured ink results in better print quality than applying a subsequent layer on top of a cured layer of ink.

### Brief description of the drawings

These and further features and advantages of the present invention are explained hereinafter with reference to the accompanying drawings showing non-limiting embodiments and wherein:

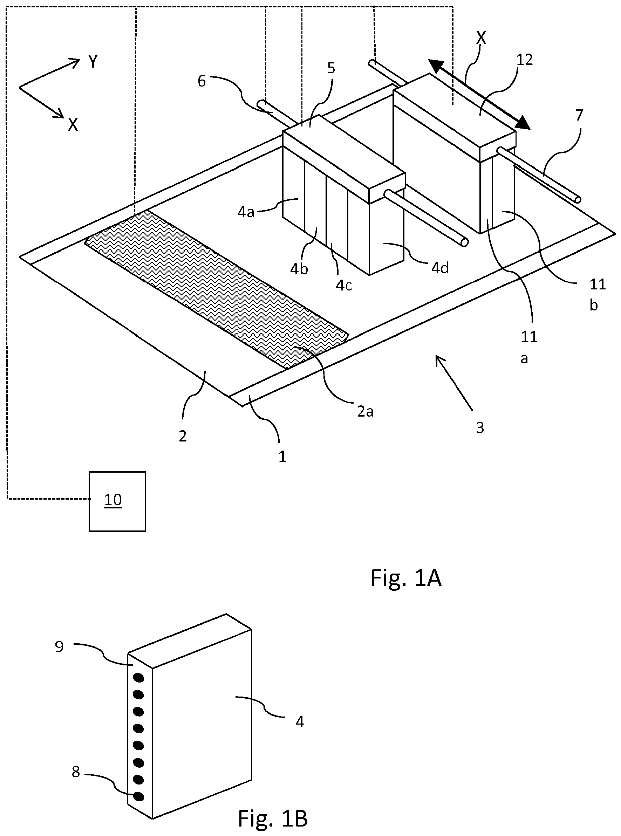

Fig. 1A shows a schematic representation of an inkjet printing system.
Fig. 1B shows a schematic representation of an inkjet print head.

In the drawings, same reference numerals refer to same elements.

### Detailed description of the drawings

Fig. 1A shows an ink jet printing assembly 3. The ink jet printing assembly 3 comprises supporting means for supporting an image receiving medium 2. The supporting means are shown in Fig. 1A as a flat surface 1, but alternatively, the supporting means may be a platen, for example a rotatable drum that is rotatable around an axis. The supporting means may be optionally provided with suction holes for holding the image receiving medium in a fixed position with respect to the supporting means. The ink jet printing assembly 3 comprises print heads 4a - 4d, mounted on a scanning print carriage 5. The scanning print carriage 5 is guided by suitable guiding means 6 to move in reciprocation in the main scanning direction X. Each print head 4a - 4d comprises an orifice surface 9, which orifice surface 9 is provided with at least one orifice 8, as is shown in Fig. 1B. The print heads 4a - 4d are configured to eject droplets of marking material onto the image receiving medium 2.

The image receiving medium 2 may be a medium in web or in sheet form and may be composed of e.g. paper, cardboard, label stock, coated paper, plastic or textile. Alternatively, the image receiving medium 2 may also be an intermediate member, endless or not. Examples of endless members, which may be moved cyclically, are a belt or a drum. The image receiving medium 2 is moved in the sub-scanning direction Y over the flat surface 1 along four print heads 4a - 4d provided with a fluid marking material.

The image receiving medium 2, as depicted in Fig. 1A is locally heated or cooled in the temperature control region 2a. In the temperature control region 2A, temperature control means (not shown), such as heating and/or cooling means may be provided to control the temperature of the receiving medium 2. Optionally, the temperature control means may be integrated in the supporting means for supporting an image receiving medium 2. The temperature control means may be electrical temperature control means. The temperature control means may use a cooling and/or heating liquid to control the temperature of the image receiving medium 2. The temperature control means may further comprise a sensor (not shown) for monitoring the temperature of the image receiving medium 2.

A scanning print carriage 5 carries the four print heads 4a - 4d and may be moved in reciprocation in the main scanning direction X parallel to the platen 1, such as to enable scanning of the image receiving medium 2 in the main scanning direction X. Only four print heads 4a - 4d are depicted for demonstrating the invention. In practice an arbitrary number of print heads may be employed. In any case, at least one print head 4a - 4d per color of marking material is placed on the scanning print carriage 5. For example, for a black-and-white printer, at least one print head 4a - 4d, usually containing black marking material is present. Alternatively, a black-and-white printer may comprise a white marking material, which is to be applied on a black image-receiving medium 2. For a full-color printer, containing multiple colors, at least one print head 4a - 4d for each of the colors, usually black, cyan, magenta and yellow is present. Often, in a full-color printer, black marking material is used more frequently in comparison to differently colored marking material. Therefore, more print heads 4a - 4d containing black marking material may be provided on the scanning print carriage 5 compared to print heads 4a - 4d containing marking material in any of the other colors. Alternatively, the print head 4a - 4d containing black marking material may be larger than any of the print heads 4a - 4d, containing a differently colored marking material.

The carriage 5 is guided by guiding means 6. These guiding means 6 may be a rod as depicted in Fig. 1A. Although only one rod 6 is depicted in Fig. 1A, a plurality of rods may be used to guide the carriage 5 carrying the print heads 4. The rod may be driven by suitable driving means (not shown). Alternatively, the carriage 5 may be guided by other guiding means, such as an arm being able to move the carriage 5. Another alternative is to move the image receiving material 2 in the main scanning direction X.

Each print head 4a - 4d comprises an orifice surface 9 having at least one orifice 8, in fluid communication with a pressure chamber containing fluid marking material provided in the print head 4a - 4d. On the orifice surface 9, a number of orifices 8 are arranged in a single linear array parallel to the sub-scanning direction Y, as is shown in Fig. 1B. Alternatively, the nozzles may be arranged in the main scanning direction X. Eight orifices 8 per print head 4a - 4d are depicted in Fig. 1B, however obviously in a practical embodiment several hundreds of orifices 8 may be provided per print head 4a - 4d, optionally arranged in multiple arrays.

As depicted in Fig. 1A, the respective print heads 4a - 4d are placed parallel to each other. The print heads 4a - 4d may be placed such that corresponding orifices 8 of the respective print heads 4a - 4d are positioned in-line in the main scanning direction X. This means that a line of image dots in the main scanning direction X may be formed by selectively activating up to four orifices 8, each of them being part of a different print head 4a - 4d. This parallel positioning of the print heads 4a - 4d with corresponding in-line placement of the orifices 8 is advantageous to increase productivity and/or improve print quality. Alternatively multiple print heads 4a - 4d may be placed on the print carriage adjacent to each other such that the orifices 8 of the respective print heads 4a - 4d are positioned in a staggered configuration instead of in-line. For instance, this may be done to increase the print resolution or to enlarge the effective print area, which may be addressed in a single scan in the main scanning direction X. The image dots are formed by ejecting droplets of marking material from the orifices 8.

The ink jet printing assembly 3 may further comprise curing means 11a, 11b. As shown in Fig. 1A, a scanning print carriage 12 carries the two curing means 11a, 11b and may be moved in reciprocation in the main scanning direction X parallel to the platen 1, such as to enable scanning of the image receiving medium 2 in the main scanning direction X. Alternatively, more than two curing means may be applied. It is also possible to apply page-wide curing means. If page-wide curing means are provided, then it may not be necessary to move the curing means in reciprocation in the main scanning direction X. The first curing means 11a may emit a first beam of UV radiation, the first beam having a first intensity. The first curing means 11a may be configured to provide the radiation for the pre-curing step. The second curing means 11b may emit a second beam of radiation, the second beam of radiation having a second intensity. The second curing means 11b may be configured to provide the radiation for the post-curing step.

The carriage 12 is guided by guiding means 7. These guiding means 7 may be a rod as depicted in Fig. 1A. Although only one rod 7 is depicted in Fig. 1A, a plurality of rods may be used to guide the carriage 12 carrying the print heads 11. The rod 7 may be driven by suitable driving means (not shown). Alternatively, the carriage 12 may be guided by other guiding means, such as an arm being able to move the carriage 12. The curing means may be energy sources, such as actinic radiation sources, accelerated particle sources or heaters. Examples of actinic radiation sources are UV radiation sources or visible light sources. UV radiation sources are preferred, because they are particularly suited to cure UV curable inks by inducing a polymerization reaction in such inks. Examples of suitable sources of such radiation are lamps, such as mercury lamps, xenon lamps, carbon arc lamps, tungsten filaments lamps, light emitting diodes (LED's) and lasers. In the embodiment shown in Fig. 1A, the first curing means 11a and the second curing means 11b are positioned parallel to one another in the sub scanning direction Y. The first curing means 11a and the second curing means 11b may be the same type of energy source or may be different type of energy source. For example, when the first and second curing means 11a, 11b, respectively both emit actinic radiation, the wavelength of the radiated emitted by the two respective curing means 11a, 11b may differ or may be the same. The first and second curing means are depicted as distinct devices. However, alternatively, only one source of UV radiation emitting a spectrum of radiation may be used, together with at least two distinct filters. Each filter may absorb a part of the spectrum, thereby providing two beams of radiation, each one having intensity different from the other.

The flat surface 1, the temperature control means, the carriage 5, the print heads 4a - 4d, the carriage 12 and the first and second curing means 11a, 11b are controlled by suitable controlling means 10.

### Experiments and examples

### Materials

UV gel 356A gel ink was obtained from Canon®. Tego airex 921, a product comprising propylene glycol and glycerol in a 1:14 propylene glycol:diglycerol ratio, was obtained from Evonik ®. All chemicals were used as received.

### Methods

### Adhesion

Rodcoats were made by applying a 26 µm thick layer of ink onto a receiving medium. As receiving medium, Avery Dennison MPI2000 was used. MPI2000 is a self-adhesive vinyl medium.

The ink was cured by irradiating the ink layer using a Phoseon Fire Power FP300 LED lamp, having a window size of 225 x 20 mm and emitting radiation having a wavelength of 395 nm. The peak irradiance at 395 nm was 16 Wcm⁻². The lamp was operated at 100% power. The lamp was placed The rodcoats were transported under the lamp 3 times at a speed of 14.5 m/min.

An ASTM d3359 cross hatch test was performed on the cured rod coats.

### Wrinkling

Rodcoats were made by applying a 26 µm thick layer of ink onto a receiving medium. As receiving medium, Avery Dennison MPI2000 was used. MPI2000 is a self-adhesive vinyl medium.

The ink was cured by irradiating the ink layer using a Phoseon Fire Power FP300 LED lamp, having a window size of 225 x 20 mm and emitting radiation having a wavelength of 395 nm. The lamp was positioned 35 cm above the moving belt. The peak irradiance, measured at 395 nm, at 100 % output and at a height of 3 cm above the moving belt, was 16 Wcm⁻².

The lamp was operated at variable power level. The rodcoats were transported under the lamp 10 times at a speed of 7.4 m/min using a moving belt. After curing, the wrinkle behavior of the cured samples was ranked as one of the following: "severe wrinkle", "wrinkle" or "no wrinkle".

### Comparison Experiments

### Example

An ink composition was prepared by providing 99.7 g of UV gel 356A gel ink in a fluid state and providing 0.3 g of tego airex 921 and mixing the components. The resulting mixture is ink composition **Ex 1,** which is an ink composition according to the present invention.

UV gel 356A gel ink was used as comparative example 1 **(CE 1).**

Adhesion tests were performed using ink compositions **Ex 1** and **CE 1.** The results are summarized in table 1.

**Table 1: Adhesion tests**

| Ink compositions | Adhesion |
|---|---|
| **Ex 1** | 4 |
| **CE 1** | 2-3 |

When comparing the adhesion of a rod coat made using **Ex 1** to a rod coat made using **CE 1,** it is observed that the rod coats made using ink composition **Ex 1** shows better adhesion than the rod coat made using ink composition **CE 1.** Thus, the ink composition according to the present invention can form images having improved adhesion compared to the ink compositions not according to the present invention. Hence, using ink compositions according to the present invention, good adhesion can be obtained. Wrinkling tests were performed using ink compositions **Ex 1** and **CE 1.** The results are summarized in table 1.

**Table 1: Wrinkling**

| Ink compositions | minimum intensity required to obtain "no wrinkle" |
|---|---|
| **Ex 1** | 25% |
| **CE 1** | 35% |

When determining wrinkle in relation to the intensity of the radiation for rodcoats prepared using ink compositions **Ex 1** and **CE 1** respectively, the following was observed. Rod coats made with ink composition **Ex 1** -which is an ink composition according to the present invention- resulted in "no wrinkle" at lamp intensities of 25% and higher. On the other hand, rod coats made with ink composition **CE 1** -which is an ink composition not according to the present invention- resulted in "no wrinkle" only at lamp intensities of 35% and higher. Thus, it is more difficult to obtain wrinkle free rod coats when using the ink not according to the present invention then when using the ink according to the present invention.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually and appropriately detailed structure. In particular, features presented and described in separate dependent claims may be applied in combination and any combination of such claims are herewith disclosed. Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

## Claims

1. Radiation curable ink composition, the ink composition comprising a gelling agent, the ink composition further comprising propylene glycol and diglycerol.

2. Radiation curable ink composition according to claim 1, wherein the ratio propylene glycol :diglycerol is in the range of 1 : 5 to 1 :50.

3. Radiation curable ink composition according to claim 1 or 2, wherein the ink composition comprises at least one (meth)acrylate monomer.

4. Radiation curable ink composition according to any of the preceding claims, wherein the ink composition is an UV curable ink jet ink composition.

5. Method for preparing an ink composition according to any of the claims 1 - 4, the method comprising the steps of :
a. providing a radiation curable vehicle;
b. providing a gelling agent;
c. providing propylene glycol ;
d. providing diglycerol ;
e. mixing the components.

6. Method for applying an image onto a recording medium, the method comprising the steps of :
a. providing an image by applying a predetermined pattern of droplets of an ink composition according to any of the claims 1- 4 onto the recording medium ;
b. curing the ink by irradiating the ink.

7. Method according to claim 6, wherein step b) is started after a time interval after step a) is performed, wherein the time interval is in the range of 5-500s.

## Patentansprüche

1. Strahlungshärtbare Tintenzusammensetzung, welche Tintenzusammensetzung ein Geliermittel aufweist, wobei die Tintenzusammensetzung weiterhin Propylenglykol und Diglycerol enthält.

2. Strahlungshärtbare Tintenzusammensetzung nach Anspruch 1, bei der das Verhältnis Propylenglykol : Diglycerol im Bereich von 1 : 5 bis 1 : 50 liegt.

3. Strahlungshärtbare Tintenzusammensetzung nach Anspruch 1 oder 2, bei der die Tintenzusammensetzung wenigstens ein (Meth)acrylat-Monomer enthält.

4. Strahlungshärtbare Tintenzusammensetzung nach einem der vorstehenden Ansprüche, bei der die Tintenzusammensetzung eine UV-härtbare Tintenstrahl-Tintenzusammensetzung ist.

5. Verfahren zum Zubereiten einer Tintenzusammensetzung nach einem der Ansprüche 1 bis 4, welches Verfahren die folgenden Schritte umfasst:
a. bereitstellen eines strahlungshärtbaren Vehikels;
b. bereitstellen eines Geliermittels;
c. bereitstellen von Propylenglykol;
d. bereitstellen von Diglycerol;
e. mischen der Komponenten.

6. Verfahren zum Aufbringen eines Bildes auf ein Aufzeichnungsmedium, welches Verfahren die folgenden Schritte umfasst:
a. herstellen eines Bildes durch aufbringen eines vorbestimmten Musters von Tröpfchen einer Tintenzusammensetzung nach einem der Ansprüche 1 bis 4 auf das Aufzeichnungsmedium;
b. aushärten der Tinte durch Bestrahlen der Tinte.

7. Verfahren nach Anspruch 6, bei dem der Schritt b) ein Zeitintervall nach der Ausführung des Schrittes a) gestartet wird, wobei das Zeitintervall im Bereich von 5 bis 500 s liegt.

## Revendications

1. Composition d'encre durcissable par radiation, la composition d'encre comprenant un agent gélifiant, la composition d'encre comprenant en outre du propylène glycol et du diglycérol.

2. Composition d'encre durcissable par radiation selon la revendication 1, dans laquelle le rapport propylène glycol:diglycérol est dans la plage de 1:5 à 1:50.

3. Composition d'encre durcissable par radiation selon la revendication 1 ou 2, dans laquelle la composition d'encre comprend au moins un monomère de (méth)acrylate.

4. Composition d'encre durcissable par radiation selon l'une quelconque des revendications précédentes, dans laquelle la composition d'encre est une composition d'encre pour jet d'encre durcissable par UV.

5. Procédé de préparation d'une composition d'encre selon l'une quelconque des revendications 1-4, le procédé comprenant les étapes de :
a. fourniture d'un véhicule durcissable par radiation ;
b. fourniture d'un agent gélifiant ;
c. fourniture de propylène glycol ;
d. fourniture de diglycérol ;
e. mélange des composants.

6. Procédé d'application d'une image sur un support d'enregistrement, le procédé comprenant les étapes de :
a. fourniture d'une image en appliquant un motif prédéterminé de gouttelettes d'une composition d'encre selon l'une quelconque des revendications 1-4 sur le support d'enregistrement ;
b. durcissement de l'encre par irradiation de l'encre.

7. Procédé selon la revendication 6, dans lequel l'étape b) est démarrée au bout d'un laps de temps après réalisation de l'étape a), dans lequel le laps de temps est dans la plage de 5-500 s.
